# EUROPEAN PATENT SPECIFICATION

(11) **EP 2 269 869 B1**
(45) Date of publication and mention of the grant of the patent: **30.03.2016**
(21) Application number: 10166981.0
(22) Date of filing: 23.06.2010
(51) Int. Cl.: B60Q 1/14, F21S 8/10

(54) **Vehicle headlamp apparatus**
Fahrzeugscheinwerfervorrichtung
Dispositif de phare de véhicule

(30) Priority: 30.06.2009 JP 2009156035
(43) Date of publication of application: 05.01.2011
(73) Proprietor: Koito Manufacturing Co., Ltd., Tokyo 108-8711 (JP)
(72) Inventor: Yamazaki, Atsushi, Shizuoka-shi Shizuoka (JP); Toda, Atsushi, Shizuoka-shi Shizuoka (JP); Mochizuki, Kiyotaka, Shizuoka-shi Shizuoka (JP); Hayakawa, Michihiko, Shizuoka-shi Shizuoka (JP); Tatara, Naoki, Shizuoka-shi Shizuoka (JP)
(74) Representative: Grünecker Patent- und Rechtsanwälte PartG mbB

(56) References cited:
- EP-A1- 1 757 485
- EP-A2- 2 100 769
- WO-A1-00/17009
- DE-A1-102007 008 623
- US-B1- 6 343 869

## Description

The present invention relates to a vehicle headlamp apparatus and, in particular, to a vehicle headlamp apparatus adapted to be used in automobiles.

A vehicle headlamp apparatus is generally operable to perform switching between a low beam and a high beam. The low beam irradiates a near region at a certain illuminance so as not to produce a glare to vehicles ahead, including oncoming vehicles and preceding vehicles, and is mainly used when driving in an urban area. On the other hand, the high beam illuminates a wide range ahead including a distant region at a relatively high illuminance, and is mainly used when driving at high speed on a road where no or few vehicles are present in front.

While the high beam is superior to a low beam in terms of driver visibility, there is a problem that it may produce a glare to drivers of other vehicles. Accordingly, the low beam is often used when driving in an urban area at nighttime. When the low beam is used, a light source for the high beam is not used. Nevertheless, there is a demand for improvement of driver visibility during low beam driving.

DE 102007045150 A1 discloses a technique according to which each headlamp has two light blocking plates that are movable with respect to a light beam. The light blocking plates of one of the headlamp are arranged to form, in combination, a light distribution pattern which irradiates only one side in a region in front of a vehicle with a high beam, and the light blocking plates of the other headlamp are arranged to form, in combination, a light distribution pattern which irradiates only the other side in the region in front of the vehicle with a high beam. The headlamps are swiveled such that a light blocked region is created so as to correspond to a region where a vehicle is present in front.

According to the technique disclosed in DE 102007045150 A1, a vehicle ahead is recognized by detecting light emitted from the vehicle ahead with an in-vehicle camera. However, when a surrounding environment is somewhat bright, for example during the twilight, headlamps or indicating lamps such as tail lamps of vehicles ahead may not be turned on. Therefore, with this method, the vehicles ahead may not be recognized during the twilight for example, in which case a suitable light distribution pattern cannot be formed and may result in producing a glare to the vehicles ahead.

According to the technique disclosed in WO 00/17009, when a vehicle ahead is detected, a headlamp is controlled to form an adaptive high beam provided that the surrounding environment brightness is lower than a predetermined threshold, otherwise, if the surrounding environment brightness is higher than the threshold, a low beam light distribution is formed.

The present invention has been made in view of above, and it is an object of the present invention to provide a technique according to claim 1 that reduces a risk of producing a glare to a vehicle ahead when changing a light distribution pattern in accordance with the vehicle ahead.

According to an aspect of the present invention, a vehicle headlamp apparatus (200) includes a lamp unit (10) operable to form an auxiliary light distribution pattern (Hi1, Hi2, Hi3, Lo3) including a region above a cutoff line of a low beam light distribution pattern (Lo1, Lo2), and a controller (228) which controls a light irradiation of the lamp unit (10) in accordance with a vehicle ahead of a vehicle (300), on which the vehicle headlamp apparatus (200) is mounted. The controller (228) limits a formation of the auxiliary light distribution pattern (Hi1, Hi2, Hi3, Lo3) when the controller (228) determines that a brightness of a surrounding environment exceeds a predetermined brightness (Lx1, Lx2).

Other aspects and advantages of the present invention will be apparent from the following description, the drawings and the claims.

Hereinafter, exemplary embodiments of the present invention will be described in detail with reference to the drawings including:
Fig. 1: a schematic vertical cross-sectional view illustrating an internal structure of a vehicle headlamp apparatus according to a first exemplary embodiment of the present invention;
Fig. 2: a schematic perspective view of a rotary shade;
Fig. 3: a functional block diagram illustrating an operational interaction between an irradiation controller of each headlamp and a vehicle controller of a vehicle;
Figs. 4A to 4F: explanatory diagrams illustrating light distribution patterns;
Fig. 5: a diagram illustrating a relationship between brightness of surrounding environment and a height of a cutoff line of an auxiliary light distribution pattern.
Fig. 6: a flowchart of an automatic light distribution control based on forward vehicle conditions and brightness of surrounding environment.
Fig. 7: a diagram illustrating a relationship between brightness of surrounding environment and an illuminance of an auxiliary light distribution pattern according to a second exemplary embodiment of the present invention.
Fig. 8A: a diagram illustrating a relationship between brightness of surrounding environment and a height of a cutoff line of an auxiliary light distribution pattern according to a third exemplary embodiment of the present invention, and
Fig. 8B: a diagram illustrating a relationship between brightness of surrounding environment and an illuminance of an auxiliary light distribution pattern according to the third exemplary embodiment.

In the drawings, the same or equivalent elements are denoted by the same reference signs, and repetitive description will be omitted where appropriate. Further, the following exemplary embodiments are illustrative examples, and do not limit the scope of the invention. The features or combinations of the features of the following exemplary embodiments are not necessarily all essential to the present invention.

### First Exemplary Embodiment

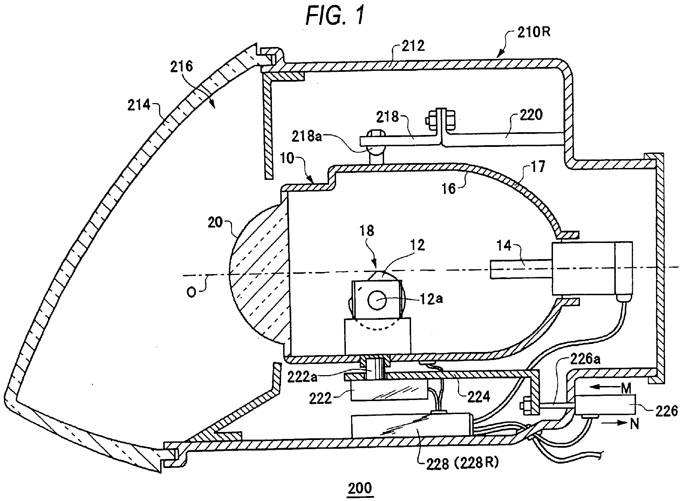

Fig. 1 is a schematic vertical cross-sectional view illustrating an internal structure of a vehicle headlamp apparatus 200 according to a first exemplary embodiment. The vehicle headlamp apparatus 200 includes right and left headlamps 210R, 210L, which are disposed on right and left sides of a vehicle, respectively, and is operable to change its light distribution pattern. The headlamps 210R, 210L have substantially the same structure except that their arrangements are symmetric. Accordingly, the right headlamp 210R will mainly be described below, and the description of the left headlamp will be omitted where appropriate. Further, when describing the left headlamp 210L, the elements of the left headlamp 210L that correspond to those of the right headlamp 201R will be denoted by the same reference signs for the sake of convenience.

The headlamp 210R includes a lamp body 212 having a front opening, and a transparent cover 214 which covers the front opening of the lamp body. The lamp body and the transparent cover 214 form a lamp chamber 216. Inside the lamp chamber 216, a lamp unit 10 is disposed. The lamp unit 10 is configured to produce and send light toward a region in front of the vehicle. A lamp bracket 218 is provided on a portion of the lamp unit 10. The lamp bracket 218 has a pivot mechanism 218a which serves as a right-and-left swiveling center and an up-and-down tilting center of the lamp unit 10. A body bracket 220 is fixed to an inner wall surface of the lamp body 212. The lamp bracket 218 is connected to the body bracket 220 by means of fasteners such as screws. Accordingly, the lamp unit 10 is fixed at a given position inside the lamp chamber 216 such that its orientation can be forwardly or backwardly inclined around the pivot mechanism 218a.

To a bottom portion of the lamp unit 10, a rotating shaft 222a of a swivel actuator 222 is attached. The swivel actuator 222 forms a part of an adaptive front-lighting system (AFS) which, for example, illuminates a region in a traveling direction during cornering operation. For example, the swivel actuator 222 swivels the lamp unit 10 around the pivot mechanism 218a in a traveling direction, based on steering angle data provided from the vehicle, road configuration data provided from a navigation system, a relative positional relationship with vehicles ahead including oncoming vehicles and preceding vehicles, etc. As a result, a region irradiated by the lamp unit 10 is changed from a straight ahead region to a region toward which a road is curved, so that driver visibility is improved. The swivel actuator 222 may be a stepping motor. Alternatively, in a case in which a swiveling angle is a fixed, a solenoid or the like may be used as the swivel actuator 222.

The swivel actuator 222 is fixed to a unit bracket 224, to which a leveling actuator 226 is connected. The leveling actuator 226 is disposed outside the lamp body 212. For example, the leveling actuator 226 includes a motor which moves a rod 226a in directions M, N. When the rod 226a is pushed in the direction M, the lamp unit 10 is tilted about the pivot mechanism 218a so as to be in the backwardly inclined orientation. In contrast, when the rod 226a is pulled in the direction N, the lamp unit 10 is tilted about the pivot mechanism 218a so as to be in the forwardly inclined orientation. Tilting of the lamp unit 10 in the backwardly inclined orientation enables a leveling adjustment to upwardly direct an optical axis. On the other hand, tilting the lamp unit 10 in the forwardly inclined orientation enables a leveling adjustment to downwardly direct the optical axis. According to such leveling adjustments, the optical axis can be adjusted in accordance with an orientation of the vehicle. As a result, it is possible to adjust a range of forward irradiation light from the vehicle headlamp apparatus 200 to an optimum distance.

The leveling adjustment may be carried out in accordance with the orientation of the vehicle while driving. For example, during acceleration, the vehicle is in a backwardly inclined orientation. In contrast, during deceleration, the vehicle is in a forwardly inclined orientation. In accordance with such changes of the orientation of the vehicle, the irradiation direction of the vehicle headlamp apparatus 200 also changes upward or downward, whereby forward irradiation distance increases or decreases. In view of this, the leveling adjustment of the lamp unit 10 may be carried out in real time based on the orientation of the vehicle, so that the range of the forward irradiation can optimally be adjusted even during the driving of the vehicle. This is called as "Auto-Leveling".

Below the lamp unit 10, an irradiation controller 228 is disposed on the inner wall surface of the lamp body 212. The irradiation controller 228 controls turning on and off of the lamp unit 10 as well as a formation of a light distribution pattern. Fig. 1 shows the irradiation controller 228R which controls the headlamp 210R. The irradiation controller 228R also controls the swivel actuator 222, the leveling actuator 226.

The lamp unit 10 may include an aiming adjustment mechanism. For example, an aiming pivot mechanism (not shown) may be provided at a connection portion between the unit bracket 224 and the rod 226a of the leveling actuator 226 to function as a rotation center during aiming adjustment. Further, a pair of aiming adjustment screws (not shown) may be provided at a connection portion between the body bracket 220 and the lamp bracket 218, such that the aiming adjustment screws are spaced away from each other in a vehicle width direction, and such that each of the aiming adjustment screws is moves in a front-rear direction of a vehicle by screwing. According to this aiming adjustment mechanism, when the two aiming adjustment screws are moved forward, the lamp unit 10 tilted around the aiming pivot mechanism so as to be in a forwardly inclined orientation, so that the optical axis is downwardly adjusted. When the two aiming adjustment screws are moved back, the lamp unit 10 is tilted around the aiming pivot mechanism so as to be in a backwardly inclined orientation, so that the optical axis is upwardly adjusted. When the aiming adjustment screw on the left is moved forward, the lamp unit 10 is rotated about the aiming pivot mechanism, so that the optical axis is adjusted toward the right. When the aiming adjustment screw on the right is moved forward, the lamp unit 10 is rotated about the aiming pivot mechanism, so that the optical axis is adjusted toward the left. This aiming adjustment is carried out before shipping of the vehicle, during vehicle inspection, and when replacing the vehicle headlamp apparatus 200. By way of the aiming adjustment, the lamp unit 10 is adjusted to be in a prescribed orientation as designed, and the control of the formation of the light distribution pattern is carried out on the basis of this prescribed orientation.

The lamp unit 10 includes a shade mechanism 18 having a rotary shade 12, a light source 14, a lamp housing 17 having a reflector 16 on an inner surface thereof, and a projection lens 20. The light source 14 may be an incandescent bulb, a halogen lamp, a discharge bulb, an LED, or the like. In this exemplary embodiment, the light source 14 is a halogen lamp. The reflector 16 reflects light emitted from the light source 14. Further, a part of the light from the light source 14 and the reflector 16 is guided to the projection lens 20 over the rotary shade 12.

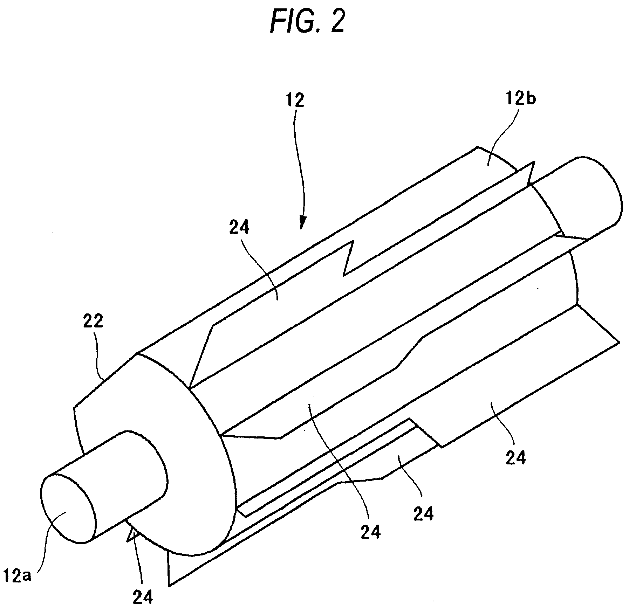

Fig. 2 is a schematic perspective view of the rotary shade 12. The rotary shade 12 is a cylindrical member and is rotatable about a rotating shaft 12a. The rotary shade 12 has a cutoff portion 22 that is formed by cutting a part of the rotary shade in an axial direction. The rotary shade 12 holds a plurality of shade plates 24 on an outer peripheral surface 12b other than the cutoff portion 22. Depending on its rotation angle, the rotary shade 12 can move one of the shade plates 24 or the cutoff portion 22 to the position of the rear focal point of the projection lens 20 on the optical axis O. When one of the shade plates 24 is positioned on the optical axis O, a light distribution pattern that corresponds to an edge line of the shade plate 24 is formed. More specifically, when the shade plate 24 positioned on the optical axis O blocks a part of the light emitted from the light source 14, a low beam light distribution pattern or a partially high beam light distribution pattern is formed. When the cutoff portion 22 is moved so as to be positioned on the optical axis O, the part of the light emitted from the light source 14 is not blocked, whereby a high beam light distribution pattern is formed.

The rotary shade 12 may be rotated by a motor, in which case a rotation amount of the motor may be controlled to move the cutoff portion 22 or the shade plate 24 to the optical axis O so as to form a desired light distribution pattern. The cutoff portion 22 may not be formed on the outer peripheral surface 12b of the rotary shade 12. In such a case, when forming a high beam light distribution pattern, the rotary shade 12 may be retracted away from the optical axis O by means of, for example, a solenoid or the like. According to this configuration, a low beam light distribution pattern or a light distribution pattern similar to the low beam light distribution pattern can be fixed even when, for example, the motor for rotating the rotary shade 12 fails. That is, a fail-safe function is provided such that the rotary shade 12 is reliably prevented from being fixed in the position for forming the high beam light distribution pattern.

Tuning back to Fig. 1, at least a part of the reflector 16 is formed in an ellipsoidal shape. This ellipsoidal surface of the reflector 16 is designed so that a cross-section including the optical axis O of the lamp unit 10 becomes at least a part of an ellipse. The ellipsoidal surface of the reflector 16 has a first focal point substantially at the center of the light source 14, and a second focal point on the rear focal plane of the projection lens 20.

The projection lens 20 is disposed on the optical axis O extending in the front-rear direction of the vehicle, and the light source 14 is disposed behind the rear focal plane of the projection lens 20. The projection lens 20 is a plano-convex aspheric lens having a convex front surface and a flat rear surface. The projection lens 20 inverts a light source image on the rear focal plane and projects the inverted light source image onto a virtual vertical screen in font of the vehicle headlamp apparatus 200. The structure of the lamp unit 10 is not particularly limited to the structure described above. For example, the lamp unit 10 may be a reflector-type lamp unit that does not have the projection lens 20.

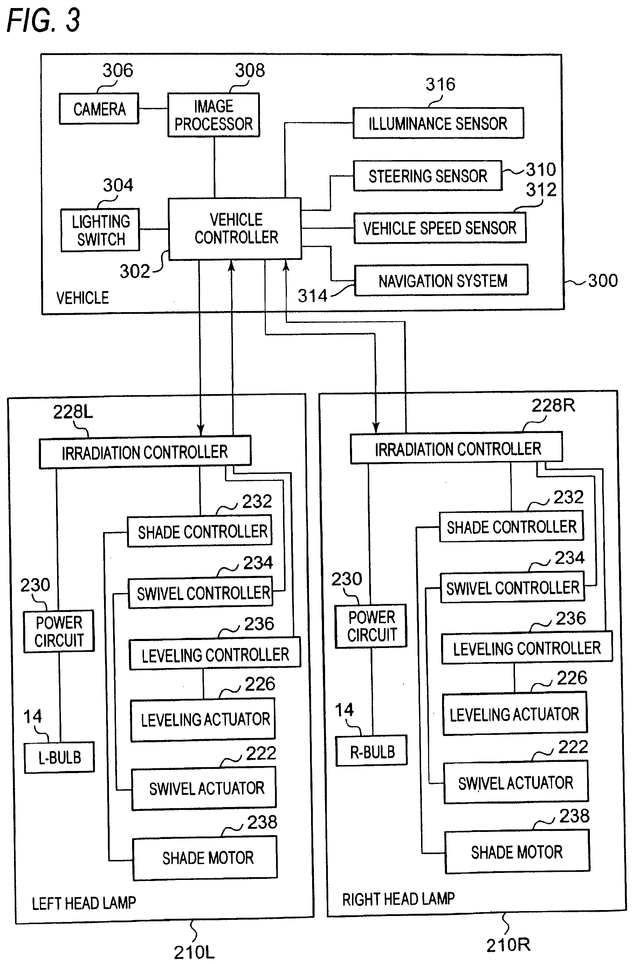

Fig. 3 is a functional block diagram illustrating an operational interaction between the irradiation controller 228 of each of the headlamps 210R, 210L and a vehicle controller 302 of the vehicle 300. Since the structures of the right headlamp 210R and the left headlamp 210L are basically the same as described above, only the right headlamp 210R will be described and the description of the left headlamp 210L will be omitted.

The irradiation controller 228R of the right headlamp 210R controls the power circuit 230 to turn on and off the light source 14, based on the information obtained from the vehicle controller 302 of the vehicle 300. The irradiation controller 228R further controls a shade controller 232, a swivel controller 234, and a leveling controller 236, based on the information obtained from the vehicle controller 302. The shade controller 232 controls the rotation of the motor 238, which is coupled to the rotating shaft 12a of the rotary shade 12 via a gear mechanism, to move the desired shade plate 24 or the cutoff portion 22 to the optical axis O. Sensors such as encoders are provided in the motor 238 and the rotary shade 12 respectively to send rotation information on the rotary shade 12 to the shade controller 232, so that feedback control is carried out for the accurate rotation control.

The swivel controller 234 controls the swivel actuator 222 to adjust the optical axis of the lamp unit 10 in the vehicle width direction. For example, during the cornering operation or when turning to the right or to the left, the optical axis of the lamp unit 10 is directed in a direction in which the vehicle is to turn. The leveling controller 236 controls the leveling actuator 226 to adjust the optical axis of the lamp unit 10 in the up and down directions. For example, in accordance with the forward or backward inclination of the orientation of the vehicle during acceleration or deceleration, the leveling controller 236 adjusts the orientation of the lamp unit 10 to adjust the range of forward irradiation light to an optimum distance. The vehicle controller 302 also provides the same information to the headlamp 210L, and an irradiation controller 228L of the left headlamp 210L carries out the same control as the irradiation controller 228R of the right headlamp 210R.

A light distribution pattern to be formed by the headlamps 210R, 210L may switchable in accordance with the operations of a lighting switch 304 by a driver of the vehicle. In such a case, in accordance with the operation of the lighting switch 304, each of the irradiation controllers 228R, 228L determines a light distribution pattern by controlling the motor 238 through the shade controller 232.

Further, the headlamps 210R, 210L may automatically be controlled irrespective of the operations of the lighting switch 304, such that, by detecting the conditions around the vehicle using various sensors, an optimal light distribution pattern for the conditions of the vehicle 300 and around the vehicle 300 is formed. For example, when it is detected that a preceding vehicle, an oncoming vehicle or a pedestrian is in front of the vehicle 300, the irradiation controllers 228R, 228L determine that glare should be prevented based the information obtained from the vehicle controller 302, and form a low beam light distribution pattern. When it is detected that a preceding vehicle, an oncoming vehicle or a pedestrian is not in front of the vehicle 300, the irradiation controllers 228R, 228L determine that driver visibility should be improved, and form a high beam light distribution pattern which does not involve blocking of the light by the shade plates 24. Further, a modified high beam light distribution pattern or a modified low beam light distribution pattern may be formed as will be described later, in which case an optimal light distribution pattern can be selected in accordance with the condition of the vehicle ahead. This control mode is called an adaptive driving beam (ADB) mode.

In order to detect an object in front of the vehicle 300, such as a preceding vehicle or an oncoming vehicle, a camera 306, such as a stereo camera, is connected to the vehicle controller 302 as means for recognizing an object. Image data obtained by the camera 306 is sent to an image processor 308 for object recognition processing, and the recognition result is sent to the vehicle controller 302. For example, when data indicative of feature points of a vehicle, which is previously stored in the vehicle controller 302, is included in the recognition result data from the image processor 308, the vehicle controller 302 recognizes the existence of the vehicle ahead and sends that information to the irradiation controllers 228R, 228L. Upon receipt of the information on the vehicle from the vehicle controller 302, the irradiation controllers 228R, 228L form an optimal light distribution pattern taking into account that vehicle. The feature points of the vehicle are, for example, light spots of a predetermined luminance or more which appear in a region where headlamps or indication lamps such as tail lamps of a vehicle ahead may exist. Further, when data indicative of a feature point of a pedestrian, which is previously stored in the vehicle controller 302, is included in the recognition result data from the image processor 308, the vehicle controller 302 sends that information to the irradiation controllers 228R, 228L, whereby the irradiation controllers 228R, 228L form an optimal light distribution pattern optimal taking into account that pedestrian.

The vehicle controller 302 may also obtain information from a steering sensor 310, a vehicle speed sensor 312, and the like that are generally mounted on the vehicle 300. Accordingly, in accordance with driving condition and/or an orientation of the vehicle 300, the irradiation controllers 228R, 228L may select a light distribution pattern to be formed or may simply adjust the light distribution patterns by changing the direction of the optical axis. For example, if the vehicle controller 302 determines that the vehicle 300 is turning based on the information from the steering sensor 310, each of the irradiation controllers 228R, 228L having received information from the vehicle controller 302 may control the rotation of the rotary shade 12 to select a shade plate 24 that forms a light distribution pattern which enhances visibility in a turning direction. Alternatively, without rotating the rotary shade 12, the swivel actuator 222 may be controlled by the swivel controller 234 so that the optical axis of the lamp unit 10 is directed to the turning direction to improve visibility. This control mode is called as a turning sensitive mode.

When driving at high speed during the nighttime, it is preferable to carry out forward irradiation so as to allow the driver to promptly recognize a preceding vehicle, an oncoming vehicle approaching from a distance, road signs, and message boards. Therefore, if the vehicle controller 302 determines that the vehicle 300 is traveling at high speed based on the information from the vehicle speed sensor 312, each of the irradiation controllers 228R, 228L may control the rotation of the rotary shade 12 to select a shade plate 24 that forms a highway mode low beam light distribution pattern which is partially different in shape from the low beam light distribution pattern. Similar results may be achieved by controlling the leveling actuator 226 by the leveling controller 236 to change the orientation of the lamp unit 10 to be in the backwardly inclined orientation. The automatic leveling control by the leveling actuator 226 during the acceleration or the deceleration described above is a control for maintaining the irradiation distance. This control may be used to control the height of a cutoff line so as to obtain a similar result as the control for selecting a cutoff line by rotating the rotary shade 12. This control mode is called as a speed sensitive mode.

The vehicle controller 302 may also obtain information from an illuminance sensor 316 that is mounted on the vehicle 300. Accordingly, during an automatic control for forming a light distribution pattern optimal for the conditions around the vehicle as described above, the irradiation controllers 228R, 228L may control the formation of the light distribution pattern in accordance with brightness of the surrounding environment (may hereinafter be referred to as environment illuminance). The detail of the control of the formation of the light distribution pattern based on the environment illuminance will be described later.

The vehicle controller 302 may also obtain information from an inter-vehicle distance sensor (not shown) that is mounted on the vehicle 300, so that each of the irradiation controllers 228R, 228L may adjust the height of a cutoff line of a light distribution pattern in accordance with a distance to a vehicle ahead (inter-vehicle distance). For example, if the vehicle controller 302 determines that a vehicle ahead is relatively far on the basis of the information from the inter-vehicle distance sensor, each of the irradiation controllers 228R, 228L controls the leveling actuator 226 through the leveling controller 236 to change the orientation of the lamp unit 10 to be in the backwardly inclined orientation, so that the cutoff line of a low beam light distribution pattern is slightly moved upward to improve driver visibility while preventing a glare to the vehicle ahead. The light distribution pattern that is formed by this control is called as a dynamic cutoff line.

The adjustment of the optical axis of the lamp unit 10 may be carried out without using the swivel actuator 222 or the leveling actuator 226. For example, the lamp unit 10 may be swiveled, or tilted in a forwardly inclined orientation or a backwardly inclined orientation through real-time aiming control, so as to improve visibility in a desired direction.

In addition, the vehicle controller 302 may also obtain information on a road configuration, location of road signs, and the like from a navigation system 314. By obtaining these kinds of information in advance, each of the irradiation controllers 228R, 228L may control the leveling actuator 226, the swivel actuator 222, the motor 238, and the like to smoothly form a light distribution pattern suitable for the road on which the vehicle 300 is traveling. This control mode is called as a navigation sensitive mode. The automatic light distribution pattern formation control including the above-mentioned various control modes is carried out when, for example, the automatic formation control is instructed from the lighting switch 304.

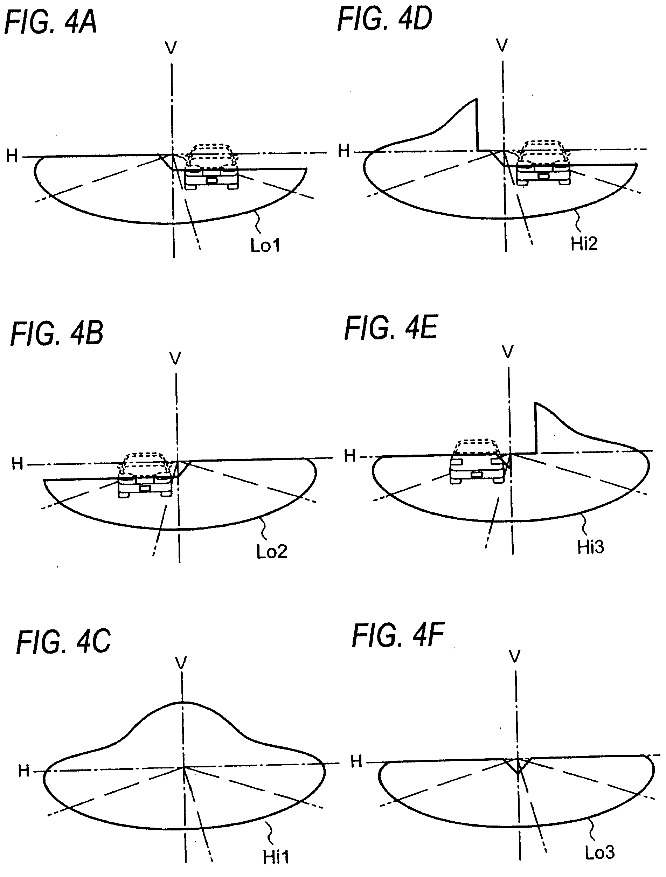

Next, the light distribution patterns that can be formed by each of the headlamps 210R, 210L of the vehicle headlamp apparatus 200 will be described. Figs. 4A to 4F are diagrams illustrating the respective light distribution patterns. Figs. 4A to 4F illustrate the light distribution patterns formed on a virtual vertical screen disposed, for example, at a position 25m ahead of the headlamp.

As described above, the headlamps 210R, 210L have substantially the same structure. Accordingly, the headlamps can form the same light distribution patterns. The projection lens 20 is a plano-convex aspheric lens having a convex front surfaceand a flat rear surface as shown in Fig. 1. Therefore, each of the light distribution patterns is an up-down and right-left inverted image of a light source image that includes a portion cut off by the corresponding shade plate 24. Therefore, the shape of a cutoff line of each of light distribution patterns corresponds to the shape of an edge of an associated shade plate 24.

Fig. 4A illustrates a left-hand traffic low beam light distribution pattern Lo1. The left-hand traffic low beam light distribution pattern Lo1 is designed so as not to produce a glare to vehicles and pedestrians ahead in the left-hand traffic system. An upper edge of the left-hand traffic low beam light distribution pattern Lo1 includes an opposite lane cutoff line that extends parallel to a horizontal line H-H line on the right side of a vertical line V-V, a traveling lane cutoff line that extends parallel to the horizontal line H at a level higher than the opposite lane cutoff line on the left side of a line V-V, and an oblique cutoff line that connects the opposite lane cutoff line and the traveling lane cutoff line. The oblique cutoff line obliquely extends upward from an intersection between the opposite lane cutoff line and the vertical line V toward the left side at an inclination angle of 45°.

Fig. 4B illustrates a right-hand traffic low beam light distribution pattern Lo2. The right-hand traffic low beam light distribution pattern Lo2 is designed so as not to produce a glare to vehicles and pedestrians ahead in the right-hand traffic system. The right-hand traffic low beam light distribution pattern Lo2 and the left-hand traffic low beam light distribution pattern Lo1 are substantially symmetric with each other with respect to the vertical line V.

Fig. 4C illustrates a high beam light distribution pattern Hi1. The high beam light distribution pattern Hi1 irradiates a wide range ahead including a distant region. The high beam light distribution pattern is formed when, for example, a glare to vehicles and pedestrians ahead need not be considered. The high beam light distribution pattern Hi1 is an auxiliary light distribution pattern that includes a region above the cutoff line of the low beam light distribution pattern.

Fig. 4D illustrates a left-side high light distribution pattern Hi2. The left-side high light distribution pattern Hi2 is a modified high beam light distribution pattern that irradiates the high beam region only on the traveling lane side and blocks irradiation on the high beam region on the opposite lane side in the left-hand traffic system. In the left-hand traffic system, the left-side high light distribution pattern Hi2 is preferably used when preceding vehicles or pedestrians do not exist on the traveling lane but oncoming vehicles or pedestrians exist on the opposite lane. The left-side high light distribution pattern Hi2 does not produce a glare to the oncoming vehicles or to the pedestrians on the opposite lane and irradiates the high beam region only on the traveling lane side so as to improve driver visibility. The left-side high light distribution pattern Hi2 is an auxiliary light distribution pattern that includes a region above the cutoff line of the low beam light distribution pattern.

Fig. 4E illustrates a right-side high light distribution pattern Hi3. The right-side high light distribution pattern Hi3 is a modified high beam light distribution pattern that irradiates the high beam region only the opposite lane side and blocks irradiation on the high beam region on the traveling lane side in the left-hand traffic system. In the left-hand traffic system, the right-side high light distribution pattern Hi3 is preferably used when oncoming vehicles or pedestrians do not exist on the opposite lane but preceding vehicles or pedestrians exist on the traveling lane. The right-side high light distribution pattern does not produce a glare to the preceding vehicles or the pedestrians on the traveling lane and irradiates the high beam region only on the opposite lane so as to improve driver visibility. The right-side high light distribution pattern Hi3 is an auxiliary light distribution pattern that includes a region above the cutoff line of the low beam light distribution pattern.

Fig. 4F illustrates a V-beam light distribution pattern Lo3. A traveling lane cutoff line and an opposite lane cutoff line of the V-beam light distribution pattern Lo3 have substantially the same height as the horizontal line H. The V-beam light distribution pattern is a modified low beam light distribution pattern that has intermediate characteristics between a low beam and a high beam. The V-beam light distribution pattern Lo3 may be formed by combining the left-hand traffic low beam light distribution pattern Lo1L formed by the left headlamp 210L and the right-hand traffic low beam light distribution pattern Lo2R formed by the right headlamp 210R (hereinafter, reference sign "L" may be added to the end of the reference sign for the light distribution pattern formed by the headlamp 210L, and reference sign "R" may be added to the end of the reference sign for the light distribution pattern formed by the headlamp 210R). As described above, the left-hand traffic low beam light distribution pattern +Lo1L has the oblique cutoff line, and the left-hand traffic low beam light distribution pattern Lo1L and the right-hand traffic low beam light distribution pattern Lo2R are symmetric with each other with respect to the vertical line V. Therefore, the V-beam light distribution pattern Lo3 has a V-shaped light blocked region which is formed by the two oblique cutoff lines below a central part of the horizontal line H. Because the left-hand traffic low beam light distribution pattern Lo1L and the right-hand traffic low beam light distribution pattern Lo2R are combined, the opposite lane cutoff line of the V-beam light distribution pattern Lo3 is higher than the opposite lane cutoff line of the left-hand traffic low beam light distribution pattern Lo1. Likewise, the traveling lane cutoff line of the V-beam light distribution pattern is higher than the traveling lane cutoff line of the right-hand traffic low beam light distribution pattern Lo2. Accordingly, the V-beam light distribution pattern Lo3 provides improved driver visibility than left-hand traffic low beam light distribution pattern Lo1 or the right-hand traffic low beam light distribution pattern Lo2. The V-beam light distribution pattern Lo3 does not produce a glare to relatively distant vehicles or pedestrians ahead, while improving driver visibility by irradiating up to substantially the same height as the horizontal line H. The V-beam light distribution pattern Lo3 is an auxiliary light distribution pattern that includes a region above the cutoff line of the low beam light distribution pattern.

The vehicle headlamp apparatus 200 having the configuration described above can also form a split light distribution pattern. The split light distribution pattern includes a light blocked region in a central portion of a region above the horizontal line H, and is a modified high beam light distribution pattern that includes high beam regions on both right and left sides of the light blocked region. The split light distribution pattern is an auxiliary light distribution pattern that includes a region above the cutoff line of the low beam light distribution pattern. The split light distribution pattern may be formed by superimposing the left-side high light distribution pattern Hi2L formed by the left headlamp 210L and the right-side high light distribution pattern Hi3R formed by the right headlamp 210R. When the split light distribution pattern is formed, the left-side high light distribution pattern Hi2L and the right-side high light distribution pattern Hi3R are superimposed so that the high beam region of the left-side high light distribution pattern Hi2L and the high beam region of the right-side high light distribution pattern Hi3R are spaced away from each other to form the light blocked region. When at least one of the left-side high light distribution pattern Hi2L and the right-side high light distribution pattern Hi3R is horizontally moved by swiveling at least one of the amp units 10 of the headlamps 210R, 210L, the range of the light blocked region is changed in the horizontal direction.

When the vehicle controller 302 detects the existence of a vehicle ahead based on the information obtained from the camera 306 while the automatic light distribution control is being instructed from the lighting switch 304, the irradiation controllers 228R, 228L receive the information from the vehicle controller 302 and determine whether the vehicle ahead is in a range where the light blocked region can be formed. If the vehicle ahead is in the range where the light blocked region can be formed, the irradiation controllers 228R, 228L form the split light distribution pattern such that the vehicle ahead is included in the light blocked region. Further, the irradiation controllers 228R, 228L modify the light blocked region in accordance with the instruction from the vehicle controller 302 so as to follow the position of the vehicle ahead. When the vehicle ahead is out of the range where the light blocked region can be formed, the irradiation controllers 228R, 228L reduce the illuminance of at least one of the left-side high light distribution pattern Hi2L and the right-side high light distribution pattern Hi3R so that the vehicle ahead is not included in the irradiated region. According to this control, it is possible to improve driver visibility in other regions, particularly, left and right shoulder regions of a road without producing a glare to the vehicle ahead. The "reducing if the illuminance" includes a case in which illuminance of the light distribution pattern is decreased to a level that does not produce a glare to a vehicle ahead, and a case in which the illuminance of the light distribution pattern is decreased to zero. The case in which the illuminance of the light distribution pattern is zero includes a case in which the irradiation controllers 228R, 228L switch a light distribution pattern to the left-hand traffic low beam light distribution pattern Lo1.

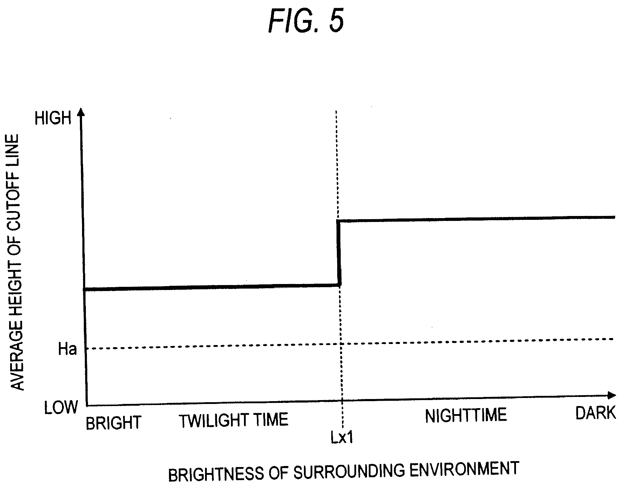

Next, an example of the control of the formation of the light distribution pattern to be performed by the vehicle headlamp apparatus 200 according to this exemplary embodiment will be described. Fig. 5 is a diagram illustrating a relationship between brightness of surrounding environment and the average height of a cutoff line of a light distribution pattern.

In this exemplary embodiment, the irradiation controllers 228R, 228L controls the respective lamp units 10 to form an auxiliary light distribution pattern in accordance with an existence of a vehicle ahead, and restrict the formation of the auxiliary light distribution pattern when the brightness of environment surrounding the vehicle 300 exceeds a predetermined brightness. The auxiliary light distribution pattern includes a region above the cutoff line of the low beam light distribution pattern. Examples of the auxiliary light distribution pattern include the high beam light distribution pattern Hi1, the left-side high light distribution pattern Hi2, the right-side high light distribution pattern Hi3, the split light distribution pattern, and the V-beam light distribution pattern Lo3.

As shown in Fig. 5, when the brightness of surrounding environment exceeds the illuminance Lx1, the irradiation controllers 228R, 228L execute a restrictive ADB mode to form an auxiliary light distribution pattern having a cutoff line that is at least partially lower than when the brightness of surrounding environment is does not exceed the illuminance Lx1. More specifically, when the brightness of surrounding environment exceeds the illuminance Lx1, the average height of the cutoff line of the auxiliary light distribution pattern is controlled to be higher than the average height Ha of a cutoff line of the left-hand traffic low beam light distribution pattern Lo1 but lower than the average height of a cutoff line of the auxiliary light distribution pattern that is formed when the brightness of surrounding environment is equal to or lower than the illuminance Lx1.

For example, even when the detected condition of a vehicle ahead allows the formation of the high beam light distribution pattern Hi1, in a case in which the environment illuminance exceeds the illuminance Lx1, the irradiation controllers 228R, 228L form the left-side high light distribution pattern Hi2, the right-side high light distribution pattern Hi3, the split light distribution pattern, or the V-beam light distribution pattern Lo3, which is an auxiliary light distribution pattern having a cutoff line that is at least partially lower than that of the high beam light distribution pattern Hi1. Further, even when the detected condition of a vehicle ahead allows the formation of the split light distribution pattern, in a case in which the environment illuminance exceeds the illuminance Lx1, the irradiation controllers 228R, 228L form the left-side high light distribution pattern Hi2, the right-side high light distribution pattern Hi3, or the V-beam light distribution pattern Lo3, which is an auxiliary light distribution pattern having a cutoff line that is at least partially lower than that of the split light distribution pattern. Furthermore, even when the detected condition of a vehicle ahead allows the formation of the left-side high light distribution pattern Hi2 or the right-side high light distribution pattern Hi3, in a case in which the environment illuminance exceeds the illuminance Lx1, the irradiation controllers 228R, 228L form the V-beam light distribution pattern Lo3, which is an auxiliary light distribution pattern having a cutoff line that is at least partially lower than that of the left-side high light distribution pattern Hi2 or the right-side high light distribution pattern Hi3.

Alternatively, each of the irradiation controllers 228R, 228L may control of the leveling actuator 226 to downwardly incline the optical axis of the lamp unit 10 so as to lower the height of the cutoff line of the auxiliary light distribution pattern suitable for the forward vehicle condition, thereby forming an auxiliary light distribution pattern having a cutoff line that is relatively low. When inclining the optical axis downward to form an auxiliary light distribution pattern with a lowered cutoff line, the height of a cutoff line is lowered to, for example, a height where the height of the entire cutoff line is equal to or lower than the horizontal line so that the likelihood of producing a glare to a vehicle ahead can be reduced.

When the detected condition of a vehicle ahead allows the formation of the V-beam light distribution pattern Lo3 and when the environment illuminance exceeds the illuminance Lx1, the irradiation controllers 228R, 228L control of the leveling actuator 226 to downwardly incline the optical axis of the lamp units 10 so as to form an auxiliary light distribution pattern having a cutoff line that is at least lower than that of the V-beam light distribution pattern Lo3. In this case, the height of a cutoff line of at least one light distribution pattern of the left-hand traffic low beam light distribution pattern Lo1L and the right-hand traffic low beam light distribution pattern Lo2R, which form the V-beam light distribution pattern Lo3, may be reduced, and it is preferable that the height of the cutoff line of the right-hand traffic low beam light distribution pattern Lo2R be reduced in the left-hand traffic system.

The brightness of environment surrounding the vehicle 300 may be determined in accordance with the result of the detection by the illuminance sensor 316. In this case, the irradiation controllers 228R, 228L obtain the result of the detection by the illuminance sensor 316 from the vehicle controller 302. If the environment illuminance detected by the illuminance sensor 316 exceeds the illuminance Lx1, the irradiation controllers 228R, 228L determine that the brightness of environment surrounding the vehicle 300 exceeds a predetermined brightness. Here, the "predetermined brightness" is brightness at the boundary between the brightness where driver visibility is difficult to be ensured without the headlamps being turned on and the brightness where driver visibility may be ensured to some extent without the headlamps being turned on since the surrounding brightness at a certain level but not sufficient that driver visibility can be improved by the turning on of the headlamps. In other words, under the "predetermined brightness", some vehicles have their headlamps turned on but other vehicles have their headlamps turned off. For example, the "predetermined brightness" is brightness at a boundary between the nighttime and the twilight time. Further, the "illuminance Lx1" is the illuminance at the time of the "predetermined brightness" and, for example, is the illuminance at a boundary between the nighttime and the twilight time. Accordingly, as shown in Fig. 5, the average cutoff line becomes high during the nighttime and becomes low during the twilight time. Such brightness and illuminance may be determined based on experiments or simulations.

The method of determining the brightness of environment surrounding the vehicle 300 is not limited to the method using the illuminance sensor 316. For example, if the vehicle 300 has a daytime running lamp (DRL), it may be determined that the brightness of surrounding environment has exceeded the predetermined brightness when the DRL is turned on. In this case, the irradiation controllers 228R, 228L can obtain the information about the turning-on of the DRL from the vehicle controller 302. Alternatively, a given time zone may be defined as a time zone in which the environment illuminance exceeds the illuminance Lx1, and may be stored in advance in a storage unit (not shown) of the irradiation controllers 228R, 228L or the vehicle controller 302. In this case, it may be determined that brightness of surrounding environment has exceeded the predetermined brightness by comparing the time zone information stored in the storage unit and the current time. Alternatively, a plurality of regional sunrise/sunset time tables may stored in the storage unit, and the current position of the vehicle 300 may be obtained by a global positioning system (GPS) of the navigation system 314. In this case, it may be determined that the brightness of surrounding environment has exceeded the predetermined brightness, by estimating the environment illuminance around the vehicle 300 at the current time with reference to a table, which corresponds to the current position of the vehicle 300, among the regional sunrise/sunset time tables stored in the storage unit. Alternatively, a sunrise/sunset time table for a certain vehicle traveling region may be stored in the storage unit in advance, and it may be determined that the brightness of surrounding environment has exceeded the predetermined brightness by estimating the environment illuminance at the current time with reference to the table.

In yet another example, illuminance of the image captured through the camera 306 may be detected using the vehicle controller 302 or the irradiation controllers 228R, 228L, and it may be determined that the brightness of surrounding environment has exceeded the predetermined brightness on the basis of the illuminance of the image. In this case, for example, it may be determined that the brightness of surrounding environment has exceeded the predetermined brightness if the average pixel depth of the respective pixels of the camera 306 exceeds a threshold. Alternatively, it may be determined that the brightness of surrounding environment has exceeded the predetermined brightness if the average gain of the respective pixels of the camera 306 exceeds a threshold. Further, it may be determined that the brightness of surrounding environment has exceeded the predetermined brightness if the average pixel depth of the respective pixels of the camera 306 exceeds its threshold and the average gain exceeds its threshold.

When the brightness of surrounding environment exceeds the illuminance Lx1, the irradiation controllers 228R, 228L may prevent the formation of an auxiliary light distribution pattern instead of forming an auxiliary light distribution pattern having a lowered cutoff line. In this case, the left-hand traffic low beam light distribution pattern Lo1 may be formed.

When an auxiliary light distribution pattern having a lowered cutoff line is formed, it is possible to improve driver visibility as compared with the left-hand traffic low beam light distribution pattern Lo1, and to reduce likelihood of producing a glare to a vehicle ahead in accordance with how much the cutoff line is lowered. On the other hand, when the formation of the auxiliary light distribution pattern is prevented, driver visibility is substantially the same level as the left-hand traffic low beam light distribution pattern Lo1. However, the likelihood of producing a glare to a vehicle ahead is reduced as compared with the case in which the height of a cutoff line is lowered. Whether to form an auxiliary light distribution pattern having a lowered cutoff line or to prevent the formation of the auxiliary light distribution pattern may be selected depending on the required driver visibility and the required prevention of a glare to a vehicle ahead.

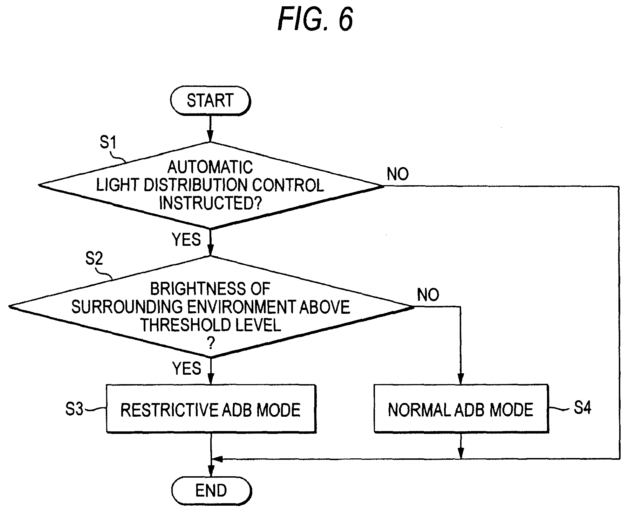

Fig. 6 is a control flowchart of the automatic light distribution control based on forward vehicle condition and brightness of surrounding environment. The irradiation controllers 228R, 228L repeat this flow at given timings.

First, on the basis of the information obtained from the vehicle controller 302, the irradiation controllers 228R, 228L determine whether the automatic light distribution control is being instructed (S1). If the automatic light distribution control is not being instructed (S1; No), this routine is ended. If the automatic light distribution control is being instructed (S1; Yes), the irradiation controllers 228R, 228L determine whether the brightness of environment surrounding the vehicle 300 exceeds the predetermined brightness based on the information obtained from the vehicle controller 302 (S2).

If the brightness of environment surrounding the vehicle 300 is exceeding the predetermined brightness (S2; Yes), the irradiation controllers 228R, 228L execute the restrictive ADB mode that includes the limited formation of the auxiliary light distribution pattern as described above (S3). If the brightness of environment surrounding the vehicle 300 is not exceeding the predetermined brightness (S2; No), the irradiation controllers 228R, 228L execute the normal ADB mode to form an auxiliary light distribution pattern in accordance with the existence of a vehicle ahead based on the instruction from the vehicle controller 302 (S4).

In the case in which the brightness of surrounding environment is exceeding the predetermined brightness, alternatively, a horizontal cut light distribution pattern having a cutoff line that is substantially at the same height as the horizontal line H may be formed as another light distribution pattern that can reduce likelihood of producing a glare to a vehicle ahead.

The operations and advantages of the configuration described above will be summarized below. In the vehicle headlamp apparatus 200 according to this exemplary embodiment, an auxiliary light distribution pattern, which includes a region above the cutoff line of the low beam light distribution pattern, is controlled in accordance with an existence of a vehicle ahead and brightness of surrounding environment. Specifically, if it is determined that the brightness of environment surrounding the vehicle 300 exceeds a predetermined brightness, the formation of the auxiliary light distribution pattern is limited. For example, the cutoff line of the auxiliary light distribution pattern is lowered than when the brightness of surrounding environment is not exceeding the predetermined brightness. Alternatively, the formation of the auxiliary light distribution pattern is prevented. By limiting the formation of the auxiliary light distribution pattern as described above when the brightness of surrounding environment exceeds the predetermined brightness, it is possible to prevent a glare to a vehicle ahead that may be detected under a condition in which not all the vehicles have their headlamp being turned on, for example during the twilight time. Accordingly, when the light distribution pattern is to be changed in accordance with the existence of a vehicle ahead, it is possible to reduce the likelihood of producing a glare to a vehicle ahead.

Furthermore, since the formation of an auxiliary light distribution pattern is limited in accordance with the brightness of surrounding environment, it is be possible to reduce the likelihood of producing a glare to a vehicle ahead with a less costly configuration than in a case in which additional sensors are used in combination with a camera so as to prevent the occurrence of the omission of the detection of a vehicle ahead. In addition, it is possible to reduce the number of times of turning-on of the light source 14 during the ADB mode and the number of times of the driving the motor 238 for rotating the rotary shade 12. Therefore, it is possible to reduce power consumption and to lengthen the life of components of the vehicle headlamp apparatus 200, such as the light source 14 and the motor 238. In other words, durability required for these components can be lowered.

### Second Exemplary Embodiment

A vehicle headlamp apparatus according to a second exemplary embodiment is different from the first exemplary embodiment in that illuminance of the auxiliary light distribution pattern is reduced to limit the formation of the auxiliary light distribution pattern. In the second exemplary embodiment, the basic configuration of the vehicle headlamp apparatus, the light distribution patterns that can be formed, the control flow and the like are the same or similar to those in the first exemplary embodiment. Accordingly, the same or similar elements will be denoted by the same reference numerals, the description and illustration thereof will be omitted.

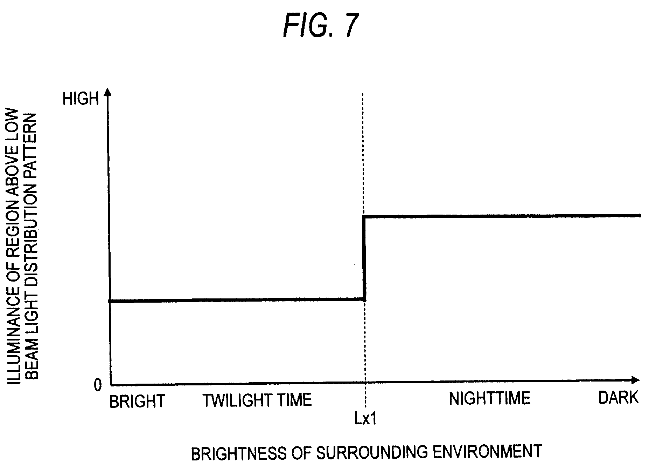

Fig. 7 is a diagram illustrating a relationship between brightness of surrounding environment and illuminance of a light distribution pattern in a region above a cutoff line of a left-hand traffic low beam light distribution pattern (hereinafter, may be referred to as the "illuminance of a region above a low beam light distribution pattern") according to the second exemplary embodiment. In this exemplary embodiment, irradiation controllers 228R, 228L control lamp units 10 to form an auxiliary light distribution pattern in accordance with an existence of a vehicle ahead, and limits the formation of the auxiliary light distribution pattern when the brightness of environment surrounding the vehicle 300 exceeds a predetermined brightness.

As shown in Fig. 7, when the brightness of surrounding environment exceeds the illuminance Lx1, the irradiation controllers 228R, 228L execute a restrictive ADB mode to forms an auxiliary light distribution pattern with lower illuminance than when the brightness of surrounding environment is equal to or lower than the illuminance Lx1. More specifically, when the brightness of surrounding environment exceeds the illuminance Lx1, the illuminance of a region above the low beam light distribution pattern becomes lower than when the brightness of surrounding environment is equal to or lower than the illuminance Lx1.

For example, when the environment illuminance exceeds the illuminance Lx1 while the detected condition of a vehicle ahead allows the formation of the high beam light distribution pattern Hi1, the left-side high light distribution pattern Hi2, the right-side high light distribution pattern Hi3, the split light distribution pattern, or the V-beam light distribution pattern Lo3, the irradiation controllers 228R, 228L reduces the illuminance of one of those auxiliary light distribution patterns to a given level, and forms the auxiliary light distribution pattern with the reduced illuminance. Each of the irradiation controllers 228R, 228L can reduce the illuminance of the auxiliary light distribution pattern by changing the magnitude of electric power that is output to the light source 14 from the power circuit 230. Here, the "reduced illuminance" is set taking into account so as not to produce a glare to a vehicle ahead, and may be determined based on experiments or simulations.

Alternatively, when the environment illuminance exceeds the illuminance Lx1, the irradiation controllers 228R, 228L may prevent the formation of the auxiliary light distribution pattern instead of forming the auxiliary light distribution pattern with the reduced illuminance. In this case, the left-hand traffic low beam light distribution pattern Lo1 may be formed.

When an auxiliary light distribution pattern with the reduced illuminance is formed, it is possible to improve driver visibility as compared with the left-hand traffic low beam light distribution pattern Lo1. Further, it is possible to reduce the likelihood of producing a glare to a vehicle ahead through the reduction of illuminance. On the other hand, when the formation of the auxiliary light distribution pattern is prevented, driver visibility is substantially in the same level as the left-hand traffic low beam light distribution pattern Lo1. However, the likelihood of producing a glare to a vehicle ahead is reduced as compared with the case in which the auxiliary light distribution pattern is formed with the reduced illuminance. Whether to form an auxiliary light distribution pattern with a reduced illuminance or to prevent the formation of the auxiliary light distribution pattern may be selected depending on the required driver visibility and the required prevention of a glare to a vehicle ahead.

A method of determining the brightness of environment surrounding the vehicle 300 is the same as that in the first exemplary embodiment. Further, the lowering of the height of the cutoff line in the first exemplary embodiment and the reduction of illuminance in this second exemplary embodiment may be performed in a combined manner to limit the formation of the auxiliary light distribution pattern. In this case, the control by the irradiation controllers 228R, 228L becomes complex, but the likelihood of producing a glare to a vehicle ahead can be further reduced as compared with a case in which the lowering of the height of the cutoff line or the reduction of illuminance is performed alone.

Also according to the configuration of the second exemplary embodiment, when the light distribution pattern is to be changed in accordance with the existence of a vehicle ahead, it is possible to reduce the likelihood of producing a glare to a vehicle ahead.

### Third Exemplary Embodiment

A vehicle headlamp apparatus according to a third exemplary embodiment is different from the vehicle headlamp apparatuses according to the first and second exemplary embodiments in that the formation of an auxiliary light distribution pattern is controlled while distinguishing twilight time from the daytime in addition to distinguishing the nighttime from twilight time. This embodiment will be described below. In the third exemplary embodiment, the basic configuration of the vehicle headlamp apparatus, the light distribution patterns that can be formed, the control flow and the like are the same or similar to those in the first and second exemplary embodiments. Accordingly, the same or similar elements will be denoted by the same reference numerals, the description and illustration thereof will be omitted.

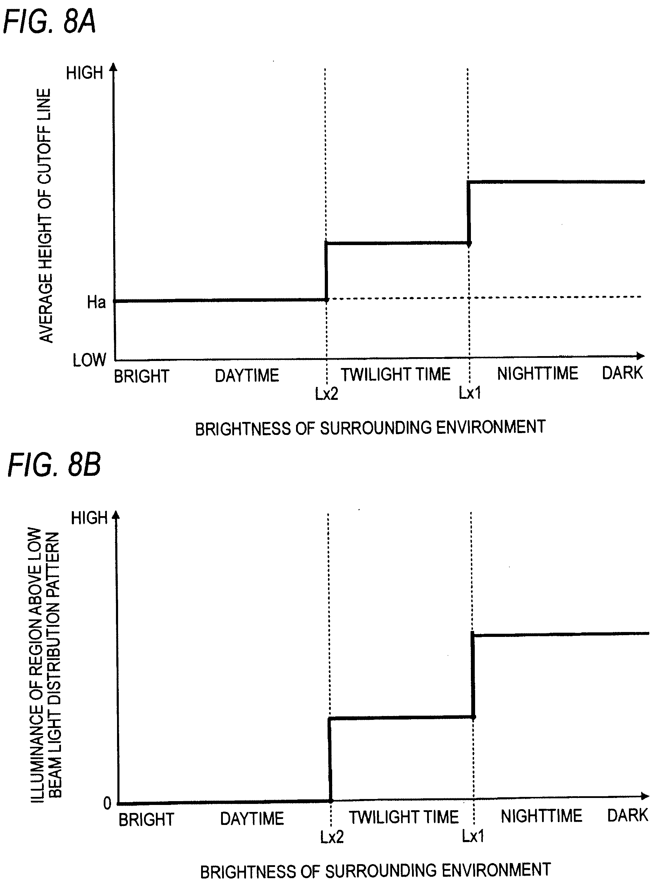

Fig. 8A is a diagram illustrating a relationship between brightness of surrounding environment and the average height of a cutoff line of a light distribution pattern according to the third exemplary embodiment, and Fig. 8B is a diagram illustrating a relationship between the brightness of surrounding environment and the illuminance of a region above a low beam light distribution pattern according to the third exemplary embodiment.

In this third exemplary embodiment, the irradiation controllers 228R, 228L control the lamp units 10 to form an auxiliary light distribution pattern in accordasnce with an existence of a vehicle ahead. Further, when it is determined that the brightness of environment surrounding the vehicle 300 exceeds a predetermined first brightness, the irradiation controllers 228R, 228L form an auxiliary light distribution pattern having a cutoff line that is lower than when the brightness of surrounding environment is equal to or lower than a first brightness. Furthermore, when it is determined that the brightness of surrounding environment exceeds a second brightness which is brighter than the first brightness, the irradiation controllers 228R, 228L prevent the formation of the auxiliary light distribution pattern.

More specifically, as shown in Fig. 8A, when the brightness of surrounding environment exceeds illuminance Lx1, the irradiation controllers 228R, 228L execute a restrictive ADB mode to form an auxiliary light distribution pattern having a cutoff line that is at least partially lower than when the brightness of surrounding environment is equal to or lower than the illuminance Lx1. Further, when the brightness of surrounding environment exceeds illuminance Lx2, which is brighter than the illuminance Lx1, the irradiation controllers 228R, 228L execute a restrictive ADB mode to prevent the formation of the auxiliary light distribution pattern. Accordingly, when the brightness of surrounding environment is equal to or lower than the illuminance Lx2 but higher than the illuminance Lx1, the average height of a cutoff line of a light distribution pattern is higher than the average height Ha of the cutoff line of the left-hand traffic low beam light distribution pattern Lo1 but is lower than the average height of a cutoff line when the brightness of surrounding environment is equal to or lower than the illuminance Lx1. When the brightness of surrounding environment exceeds the illuminance Lx2, the average height of a cutoff line of a light distribution pattern is equal to the average height Ha of the cutoff line of the left-hand traffic low beam light distribution pattern Lo1.

For example, when the environment illuminance exceeds the illuminance Lx1, like in the first exemplary embodiment, the irradiation controllers 228R, 228L form the left-side high light distribution pattern Hi2, the right-side high light distribution pattern Hi3, the split light distribution pattern, or the V-beam light distribution pattern Lo3 when the forward vehicle condition allows the formation of the high beam light distribution pattern Hi1, form the left-side high light distribution pattern Hi2, the right-side high light distribution pattern Hi3, or the V-beam light distribution pattern Lo3 when the forward vehicle condition allows the formation of the split light distribution pattern, and form the V-beam light distribution pattern Lo3 when the forward vehicle condition allows the formation of the left-side high light distribution pattern Hi2 or the right-side high light distribution pattern Hi3.

Alternatively, each of the irradiation controllers 228R, 228L may control of the leveling actuator 226 to downwardly incline the optical axis of the lamp unit 10 so as to lower the height of the cutoff line of the auxiliary light distribution pattern suitable for the forward vehicle condition, thereby forming an auxiliary light distribution pattern having a cutoff line that is relatively low.

When the detected condition of a vehicle ahead allows the formation of the V-beam light distribution pattern Lo3 and when the environment illuminance exceeds the illuminance Lx1, the irradiation controllers 228R, 228L control of the leveling actuator 226 to downwardly incline the optical axis of the lamp units 10 so as to form an auxiliary light distribution pattern having a cutoff line that is at least lower than that of the V-beam light distribution pattern Lo3.

Further, when the environment illuminance exceeds the illuminance Lx2, the irradiation controllers 228R, 228L prevent the formation of the auxiliary light distribution pattern instead of forming the auxiliary light distribution pattern having the lowered cutoff line.

Alternatively, in this third exemplary embodiment, the irradiation controllers 228R, 228L may control the lamp units 10 to form an auxiliary light distribution pattern in accordance with an existence of a vehicle ahead and, if it is determined that the brightness of environment surrounding the vehicle 300 exceeds the predetermined first brightness, the irradiation controllers 228R, 228L may form the auxiliary light distribution pattern with a lower illuminance than when the brightness of surrounding environment is equal to or lower than a first brightness. Furthermore, if it is determined that the brightness of surrounding environment exceeds the second brightness, which is brighter than the first brightness, the irradiation controllers 228R, 228L prevent the formation of an auxiliary light distribution pattern.

More specifically, as shown in Fig. 8B, when the brightness of surrounding environment exceeds illuminance Lx1, the irradiation controllers 228R, 228L execute a restrictive ADB mode to form the auxiliary light distribution pattern with a lower illuminance than that the brightness of surrounding environment is equal to or lower than the illuminance Lx1. Further, when the brightness of surrounding environment exceeds illuminance Lx2 which is brighter than the illuminance Lx1, the irradiation controllers 228R, 228L execute a restrictive ADB mode to prevent the formation of the auxiliary light distribution pattern. Accordingly, when the brightness of surrounding environment is higher than the illuminance Lx1 and is equal to or lower than the illuminance Lx2, the illuminance of the region above the low beam light distribution pattern is lower than when the brightness of surrounding environment is equal to or lower than the illuminance Lx1. Further, when the brightness of surrounding environment exceeds the illuminance Lx2, the illuminance of the region above the low beam light distribution pattern is equal to the illuminance of the left-hand traffic low beam light distribution pattern Lo1.

For example, when the environment illuminance exceeds the illuminance Lx1 while the detected condition of a vehicle ahead allows the formation of the high beam light distribution pattern Hi1, the left-side high light distribution pattern Hi2, the right-side high light distribution pattern Hi3, the split light distribution pattern, or the V-beam light distribution pattern Lo3, like in the second exemplary embodiment, the irradiation controllers 228R, 228L form the auxiliary light distribution pattern with the reduced illuminance. Further, when the environment illuminance exceeds the illuminance Lx2, the irradiation controllers 228R, 228L prevent the formation of an auxiliary light distribution pattern instead of forming the auxiliary light distribution pattern with the reduced illuminance.

When the environment illuminance is between the illuminance Lx1 and the illuminance Lx2, the lowering of the height of a cutoff line and the reduction of illuminance may be performed in a combined manner to limit the formation of the auxiliary light distribution pattern. In this case, the control by the irradiation controllers 228R, 228L becomes complex, but the likelihood of producing a glare to a vehicle ahead can be further reduced as compared with the case in which the lowering of the height of a cutoff line or the reduction of illuminance is performed alone.

The brightness of environment surrounding the vehicle 300 may be determined in accordance with the result of the detection by the illuminance sensor 316. In this case, if the environment illuminance detected by the illuminance sensor 316 exceeds the illuminance Lx1, the irradiation controllers 228R, 228L determine that the brightness of environment surrounding the vehicle 300 has exceeded the predetermined first brightness. If the environment illuminance detected by the illuminance sensor 316 exceeds the illuminance Lx2, the irradiation controllers 228R, 228L determine that the brightness of environment surrounding the vehicle 300 has exceeded the predetermined second brightness. Here, the "predetermined first brightness" may be the same as the "predetermined brightness" in the first exemplary embodiment, and the "illuminance Lx1" is the illuminance at the time of the "predetermined first brightness". Further, the "predetermined second brightness" is brightness at the boundary between the brightness where driver visibility may be ensured to some extent without the headlamps being turned on since the surrounding brightness at a certain level but not sufficient that driver visibility can be improved by the turning on of the headlamps and the brightness where driver visibility is sufficiently ensured without the headlamps being turned on. For example, the "predetermined second brightness" is brightness at a boundary between the twilight time and the daytime. Further, the "illuminance Lx2" is the illuminance at the time of the "predetermined second brightness". For example, the "illuminance Lx2" is the illuminance at a boundary between the twilight time and the daytime. Accordingly, as shown in Figs. 8A and 8B, each of the average height of a cutoff line and the illuminance of a region above the low beam light distribution pattern becomes high during the nighttime, becomes low during the twilight time, and becomes lower during thedaytime. The first brightness, the second brightness, the illuminance Lx1 and the illuminance Lx2 may be determined based on experiments or simulations.

The method of determining the brightness of environment surrounding the vehicle 300 is not limited to the method using the illuminance sensor 316. For example, a first time zone may be defined as a time zone in which the environment illuminance exceeds the illuminance Lx1, a second time zone may be defined as a time zone in which the environment illuminance exceeds the illuminance Lx2, and the respective time zones may be stored in a storage unit in advance. In this case, it may be determined that brightness of surrounding environment has exceeded the first brightness or the second brightness by comparing the time zone information stored in the storage unit and the current time. Alternatively, a plurality of regional sunrise/sunset time tables may stored in the storage unit, and it may be determined that the brightness of surrounding environment has exceeded the first brightness or the second brightness by estimating the environment illuminance around the vehicle 300 at the current time with reference to a table, which corresponds to the current position of the vehicle 300 obtained by the GPS, among the regional sunrise/sunset time tables stored in the storage unit. Alternatively, a sunrise/sunset time table for a certain vehicle traveling region may be stored in the storage unit in advance, and it may be determined that the brightness of surrounding environment has exceeded the first brightness or the second brightness by estimating the environment illuminance at the current time with reference to the table.

In yet another example, illuminance of the image captured through the camera 306 may be detected using the vehicle controller 302 or the irradiation controllers 228R, 228L, and it may be determined that the brightness of surrounding environment has exceeded the first brightness or the second brightness on the basis of the illuminance of the image. In this case, for example, it may determined that the brightness of surrounding environment has exceeded the first brightness if the average pixel depth of the respective pixels of the camera 306 exceeds a first threshold, and it may be determined that the brightness of surrounding environment has exceeded the second brightness if the average pixel depth exceeds a second threshold. Alternatively, it may be determined that the brightness of surrounding environment has exceeded the first brightness if the average gain of the respective pixels of the camera 306 exceeds a first threshold, and it may be determined that the brightness of surrounding environment has exceeded the second brightness if the average gain of the respective pixels exceeds a second threshold.. Alternatively, it may be determined that the brightness of surrounding environment has exceeded the first brightness or second brightness, based on the combination of the average gain and the average gain of the respective pixels of the camera 306.

As described above, in this third exemplary embodiment, if it is determined that the brightness of surrounding environment exceeds a predetermined first brightness, the irradiation controllers 228R, 228L form an auxiliary light distribution pattern with a lowered cutoff line or a reduced illuminance. Further, if it is determined that the brightness of surrounding environment exceeds a second brightness, which is brighter than the first brightness, the irradiation controllers 228R, 228L prevent the formation of the auxiliary light distribution pattern. Accordingly, while enabling both the improvement of driver visibility and the reduction of likelihood of producing a glare to a vehicle ahead, it is possible to reduce power consumption and to lengthen the life of components of the vehicle headlamp apparatus 200, such as the light source 14 and the motor 238.

The present invention is not limited to the exemplary embodiments described above. The exemplary embodiments may be combined, or modifications such as various kinds of design changes may be made on the basis of the knowledge of those skilled in the art. Accordingly, the combination of the exemplary embodiments and the modifications of the exemplary embodiments are also included within the scope of the present invention. The combination of the exemplary embodiments described above and the combination of one or more of the exemplary embodiments described above and the following modifications have the advantages of the exemplary embodiments and modifications to be combined.

In the exemplary embodiments described above, the formation of an auxiliary light distribution pattern is limited when the brightness of surrounding environment exceeds the illuminance Lx1. However, in addition to the condition that the brightness of surrounding environment exceeding the illuminance Lx1, the formation of an auxiliary light distribution pattern may be limited under the condition that the surrounding environment is an urban area. That is, the likelihood vehicles existing ahead is higher in an urban area than when driving on a suburban road. However, since environment illuminance in an urban area is higher than when driving on a suburban road, the likelihood of vehicles ahead not having their headlamps being turned on in an urban area is higher than when driving on a suburban road. Therefore, the formation of an auxiliary light distribution pattern may be limited when the brightness of surrounding environment exceeds the illuminance Lx1 and when the surrounding environment is in an urban area. According to this, it is possible to reduce likelihood of producing a glare to a vehicle ahead in an urban area, and to improve driver visibility on a suburban road. It is possible to determine that the surrounding environment is in an urban area, for example, by vehicle speed information obtained from the vehicle speed sensor 312 or the combination of the vehicle speed information and illuminance information obtained from the illuminance sensor 316. Alternatively, it may be possible to determine that surrounding environment is in an urban area based on the information obtained from the navigation system 314.

Furthermore, in the exemplary embodiments described above, the control of the formation of an auxiliary light distribution pattern during the twilight time when shifting from the daytime to the nighttime has been described. However, the limiting control of the formation of the auxiliary light distribution pattern may also be applied to the twilight time such as dawn when shifting from the nighttime to the daytime to obtain the same advantages as described above.

Further, when reducing the illuminance of the auxiliary light distribution pattern in the second or third exemplary embodiment, only the illuminance of a region above the cutoff line of the low beam light distribution pattern may be reduced. According to this control, while reducing the likelihood of producing a glare to a forward ahead, it is possible to improve driver visibility below the cutoff line of the low beam light distribution pattern. The reduction of the illuminance of the region above the cutoff line of the low beam light distribution pattern may be achieved by using, for example, a light transmissive liquid crystal device having a plurality of fine cells arranged in a matrix manner as a shade instead of the shade plate 24.

Furthermore, in the exemplary embodiments described above, the irradiation controllers 228R, 228L determined the forward vehicle condition and whether the brightness of surrounding environment exceeds a predetermined brightness. However, the vehicle controller 302 may determine forward vehicle condition or whether the brightness of surrounding environment exceeds a predetermined brightness. In this case, each of the irradiation controllers 228R, 228L controls the turning on and off of the light source 14 and the driving of the motor 238 and the swivel actuator 222 on the basis of the instruction from the vehicle controller 302.

## Claims

1. A vehicle headlamp apparatus (200) comprising:
a lamp unit (10) operable to form an auxiliary light distribution pattern (Hi1, Hi2, Hi3, Lo3) including a region above a cutoff line of a low beam light distribution pattern (Lo1, Lo2); and
a controller (228) which controls a light irradiation of the lamp unit (10) in accordance with an existence of a vehicle ahead of a vehicle (300), on which the vehicle headlamp apparatus (200) is mounted, **characterized in that**
the controller (228) limits a formation of the auxiliary light distribution pattern (Hi1, Hi2, Hi3, Lo3) when the controller (228) determines that a brightness of a surrounding environment exceeds a predetermined first brightness (Lx1) such that the controller forms the auxiliary light distribution pattern (HI2, HI3, Lo3) having a cutoff line that is at least partially lower than when the brightness of the surrounding environment does not exceed the predetermined first brightness (Lx1);
and/or a lower illuminance than when the brightness of the surrounding environment does not exceed the predetermined first brightness (Lx1).

2. The vehicle headlamp apparatus (200) according to claim 1,
wherein, when the controller (228) determines that the brightness of the surrounding environment exceeds a predetermined second brightness (Lx2) which is brighter than the predetermined first brightness (Lx1), the controller (228)s prevents the formation of the auxiliary light distribution pattern (Hi1, Hi2, Hi3, Lo3).

## Patentansprüche

1. Eine Fahrzeugscheinwerfervorrichtung (200) umfassend:
eine Lampeneinheit (10), funktionsfähig zum Bilden eines Hilfslichtverteilungsmusters (Hi1, Hi2, Hi3, Lo3) umfassend einen Bereich oberhalb einer Oberkante eines Abblendlichtverteilungsmusters (Lo1, Lo2);
und
eine Steuerung (228), die eine Lichteinstrahlung der Lampeneinheit (10) in Übereinstimmung mit einer Existenz eines Fahrzeugs vor einem Fahrzeug (300), an dem die Fahrzeugscheinwerfervorrichtung (200) befestigt ist, steuert, charakterisiert dadurch, dass die Steuerung (228) eine Bildung des Hilfslichtverteilungsmusters (Hi1, Hi2, Hi3, Lo3) limitiert, wenn die Steuerung (228) ermittelt, dass eine Helligkeit einer Umgebung eine vorbestimmte erste Helligkeit (Lx1) überschreitet, sodass die Steuerung das Hilfslichtverteilungsmuster (H12, HI3, Lo3) mit einer Oberkante bildet, die zumindest teilweise tiefer ist, als wenn die Helligkeit der Umgebung nicht die vorbestimmte erste Helligkeit (Lx1) überschreitet;
und/oder eine geringere Lichtintensität hat als wenn die Helligkeit der Umgebung die vorbestimmte erste Helligkeit (Lx1) nicht überschreitet.

2. Die Fahrzeugscheinwerfervorrichtung (200) nach Anspruch 1,
wobei, wenn die Steuerung (228) ermittelt, dass die Helligkeit der Umgebung eine vorbestimmte zweite Helligkeit (Lx2) überschreitet, die heller ist als die erste vorbestimmte Helligkeit (Lx1), die Steuerung (228) die Bildung des Hilfslichtverteilungsmusters (Hi1, Hi2, Hi3, Lo3) unterbindet.

## Revendications

1. Appareil pour phare de véhicule (200) comprenant :
une unité de lampe (10) pouvant être actionnée afin de former un profil de distribution de lumière auxiliaire (Hi1, Hi2, Hi3, Lo3) comprenant une région au-dessus d'une ligne d'interruption d'un profil de distribution d'un feu de croisement (Lo1, Lo2) ; et
un dispositif de commande (228) qui commande un rayonnement lumineux de l'unité de lampe (10) conformément à l'existence d'un véhicule, à l'avant d'un véhicule (300) sur lequel l'appareil pour phare de véhicule (200) est monté, **caractérisé en ce que**
le dispositif de commande (228) limite une formation du profil de distribution de lumière auxiliaire (Hi1, Hi2, Hi3, Lo3) lorsque le dispositif de commande (228) détermine qu'une luminosité d'un environnement alentour dépasse une première luminosité prédéterminée (Lx1), de sorte que le dispositif de commande forme le profil de distribution de lumière auxiliaire (HI2, HI3, Lo3) ayant une ligne d'interruption qui est au moins partiellement inférieure à celle obtenue lorsque la luminosité de l'environnement alentour ne dépasse pas la première luminosité prédéterminée (Lx1) ;
et/ou un éclairement inférieur à celui obtenu lorsque la luminosité de l'environnement alentour ne dépasse pas la première luminosité prédéterminée (Lx1).

2. Appareil pour phare de véhicule (200) selon la revendication 1,
dans lequel, quand le dispositif de commande (228) détermine que la luminosité de l'environnement alentour dépasse une seconde luminosité prédéterminée (Lx2), qui est plus lumineuse que la première luminosité prédéterminée (Lx1), le dispositif de commande (228) empêche la formation du profil de distribution de lumière auxiliaire (Hi1, Hi2, Hi3, Lo3).
